# EUROPEAN PATENT APPLICATION

(11) **EP 0 529 597 A1**
(43) Date of publication of application: **03.03.1993**
(21) Application number: 92114518.1
(22) Date of filing: 26.08.1992
(51) Int. Cl.: C09K 19/40, C09K 19/38, C09K 19/54, C09K 19/46

(54) **Liquid crystal display device and preparation thereof**

(30) Priority: 26.08.1991 JP 213826/91; 11.12.1991 JP 327725/91
(71) Applicant: SUMITOMO ELECTRIC INDUSTRIES, LTD, Osaka-shi, Osaka-fu 541 (JP)
(72) Inventor: Kashiwagi, Tohru, c/o Osaka Works, Konohana-ku, Osaka-shi,Osaka-fu (JP); Hara, Kouji, c/o Osaka Works, Konohana-ku, Osaka-shi,Osaka-fu (JP); Takata, Kensaku, c/o Osaka Works, Konohana-ku, Osaka-shi,Osaka-fu (JP); Ono, Junichi, c/o Osaka Works, Konohana-ku, Osaka-shi,Osaka-fu (JP); Kajiyama, Tisato, Fukuoka-shi, Fukuoka (JP)
(74) Representative: Hansen, Bernd, Dr. Dipl.-Chem.

(57) **Abstract**

A liquid crystal display device having a pair of electrodes at least one of which is transparent and a mixture film which is placed between the pair of electrode and contains a side chain type liquid crystalline polymer which has repeating units with a liquid crystal side chain (A) and repeating units with no liquid crystal side chain (B), a low molecular weight liquid crystal and an electrolyte or a liquid crystal display device having a pair of electrodes at least one of which is transparent and a mixture film which is placed between the pair of electrode and contains a cross linked side chain type liquid crystalline polymer, a low molecular weight liquid crystal and an electrolyte, which has good response and a high threshold voltage.

## Description

### BACKGROUND OF THE INVENTION

### Field of the Invention

The present invention relates to a liquid crystal display device which can be used, for example, for a TV screen, various office automation instruments and other display panels.

### Description of the Related Art

Hitherto, a liquid crystal display device has been formed by injecting a liquid crystal material between a pair of transparent electrodes which are fixed with a gap of several micrometers. However, such structure does not enable the production of the display having a large area. In addition, brightness of the screen and an angle of view field are insufficient, since it is necessary to attach polarization plates having polarization axes which are perpendicular to each other to a pair of glass substrates enclosing the liquid crystal material.

In addition, in the conventional liquid crystal display device except one using a ferroelectric liquid crystal, an orientated state has no memory so that an active matrix driving such as TFT which is produced in a low yield should be used to produce a display screen having a large number of picture elements. Therefore, the production cost increases. When the ferroelectric liquid crystal is used, a very thin cell gap control of 1 to 2 µm and a uniform orientation of liquid crystal molecules are necessary, so that the ferroelectric liquid crystal cannot provide a satisfactory display even in a small area.

Recently, a new liquid crystal display device has been developed by Kajiyama et al (cf. Japanese Patent Kokai Publication Nos. 193115/1990 and 127494/1990, Chem. Lett., 817 (1989) and Polymer Preprints, Japan, 39 (3), 761 (1990)). This device is prepared by casting and coating a solution of a polymer having a side chain of a structure corresponding to a liquid crystal compound (a side chain type liquid crystalline polymer) and a conventional low molecular weight liquid crystal in a solvent on a plate-form support or a film such as a transparent electrode, drying and solidifying the solution to form a mixture film of the liquid crystalline polymer and the low molecular weight liquid crystal and placing another support thereon. In this system, a side chain type liquid crystalline polymer and a low molecular weight liquid crystal form a homogeneous mixture and are not phase-separated.

In the above liquid crystal display device, when a low frequency or a direct current is applied on the mixture film, ions move in accordance with an electric field in the mixture film and collide against the main chain of the liquid crystalline polymer so that the orientation of the liquid crystal molecules is disturbed to strongly scatter an incident light and the film becomes opaque. When a high frequency is applied on the mixture film, the liquid crystal molecules in the film are homeotropically orientated in a direction of an electric field, so that the incident light passes trrouch the film without being scattered and the film becomes transparent.

In this liquid crystal display device, after the electric field is removed, the display device has memory and maintains scattered or non-scattered states of light stably. Thereby, a control circuit can be made simple. In addition, since this liquid crystal display device is easily prepared by coating the solution of the liquid crystalline polymer and the low molecular weight liquid crystal and drying it to form the mixture film of the liquid crystalline polymer and the low molecular weight liquid crystal, a liquid crystal display having a large area is easily prepared.

Since the above mixture film contains the liquid crystalline polymer, it is self-supporting so that the gap between the transparent electrodes is maintained without a spacer and the like. Utilizing this self-supporting property of the mixture film, it is possible to assemble a flexible liquid crystal display device in combination with a support made of a flexible plastic film.

The mixture film of the liquid crystalline polymer and the low molecular weight liquid crystal is characterized in that the liquid crystalline polymer and the low molecular weight liquid crystal form a homogeneous phase, that no orientation treatment is required since the mixture film is changed from opaque to transparent through the interaction between the liquid crystalline polymer and the ions which move in accordance with the electric field, and that the liquid crystalline polymer is one of the essential components.

As one of similar techniques to the mixture film of the liquid crystalline polymer and the low molecular weight liquid crystal, there is a light modulation material, which is known to contain a side chain type liquid crystalline polymer and a low molecular weight liquid crystal (cf. Japanesse Patent Kihyo Publication No. 503963/1990). The light modulation material comprises a birefringence matrix of the side chain type liquid crystalline polymer and the low molecular liquid crystal which is dispersed in the form of minute droplets in the matrix. This structure is different from the mixture film of the liquid crystalline polymer and the low molecular weight liquid crystal since, in the light modulation material, two liquid polymers are phase separated.

As another example of the similar techniques, Crossland et al disclose a liquid crystal display device comprising a pair of electrodes which are orientated to exhibit homeotropic orientation and a layer of a smectic material which exhibits a negative anisotropy of a dielectric constant and is sandwiched by the pair of the electrodes, or a pair of electrodes which are orientated to exhibit homogeneous orientation and a layer of a smectic material which exhibits a positive anisotropy of a dielectric constant and is sandwiched by the pair of the electrodes (cf. J. Phys. D: kppl. Phys., 11, (1978) 2025-2034 and Japanese Patent Publication No. 52406/1984).

However, this liquid crystal display device uses no liquid crystalline polymer and requires the orientation treatment. When no orientation treatment is made, the device is not changed from opaque to transparent. Therefore, this device is different from the liquid crystal display device using the mixture film of the liquid crystalline polymer and the low molecular weight liquid crystal of Kajiyama et al.

Since a viscosity of the liquid crystalline polymer contained in the above described mixture film of the liquid crystalline polymer and the low molecular weight liquid crystal is rather high, a response speed from a transparent state to an opaque state or from the opaque state to the transparent state is low. To increase the response speed, it may be contemplated to increase an amount of the low molecular weight liquid crystal to reduce the viscosity of the mixture film. In such case, a threshold voltage of the device is lowered, and the number of the liquid crystalline polymer molecules in the mixture film decreases relatively, so that the self-supporting property of the mixture film is deteriorated and the flexible liquid crystal display device may not be produced.

### SUMMARY OF THE INVENTION

An object of the present invention is to provide a liquid crystal display device which has a good self-supporting property, good response and a high threshold voltage.

According to a first aspect of the present invention, there is provided a liquid crystal display device comprising a pair of electrodes at least one of which is transparent and a mixture film which is placed between said pair of electrode and comprises a side chain type liquid crystalline polymer which comprises repeating units having a liquid crystal side chain (A) and repeating units having no liquid crystal side chain (B), a low molecular weight liquid crystal and an electrolyte.

According to a second aspect of the present invention, there is provided a liquid crystal display device comprising a pair of electrodes at least one of which is transparent and a mixture film which is placed between said pair of electrode and comprises a cross linked side chain type liquid crystalline polymer, a low molecular weight liquid crystal and an electrolyte.

### BRIEF DESCRIPTION OF THE INVENTION

Figure shows a relationship between a molecular weight and a grafting rate of the liquid crystalline polymer in Example 10.

### DETAILED DESCRIPTION OF THE INVENTION

When a high frequency electric field is applied to the liquid crystal display device comprising a pair of electrodes and the mixture film containing the the side chain type liquid crystalline polymer, the low molecular weight liquid crystal and the electrolyte, the liquid crystal molecules are homeotropically orientated as described above to form a smectic A structure wherein the low molecular weight liquid crystal molecules are orientated between the liquid crystal side chains of the liquid crystalline polymer which are orientated in parallel with each other, whereby the mixture film becomes transparent.

During the change from the opaque state to the transparent state, the response speed of the device is controlled by the motion of the liquid crystal side chains of the liquid crystalline polymer.

As described above, when the low frequency or the direct current is applied on the mixture film, ions move in accordance with the electric field in the mixture film so that the liquid crystal side chain and the low molecular weight liquid crystal molecules and also the main chains of the liquid crystalline polymer are randomly orientated to make the film opaque.

During the change from the transparent state to the opaque state, the response speed is controlled by the motion of the backbone chains of the liquid crystalline polymer.
The main cause for this may be that the plural side chains bonded to the main chain limits the motion of the main chain.

When the molar ratio of the repeating units having the liquid crystal side chain is decreased, the motion of the main chain is improved since the motion of the main chain is less restricted by the side chains. In addition, there are more rooms between the side chains, the motions of the side chain themselves and the low molecular weight liquid crystal are also improved.

Therefore, when the liquid crystalline polymer having the smaller molar ratio of the liquid crystal side chain is used, the response speed can be increased without decreasing the content of the low molecular weight liquid crystal in the mixture film.

In a preferred embodiment of the present invention, a molar ratio of the repeating units (A) having the liquid crystal side chain to the total mole of the repeating units (A) and (B) is at least 0.25 and smaller than 1.00. That is, a percentage of the repeating units (A) in the liquid crystalline polymer (the repeating units (A) and (B)) is at least 25 % by mole and less than 100 % by mole.

When the content of the repeating units (A) is less than 100 % by mole, the motion of the main chain is less restricted by the liquid crystal side chains, so that the movability of the main chain is improved. Since a wider space is provided between the adjacent side chains, the movability of the side chains and also the low molecular weight liquid crystal is improved. Therefore, the response speed of the mixture film is increased without increasing the content of the low molecular weight liquid crystal, so that the device having a good self-supporting property and a high response speed can be produced.

When the content of the repeating units (A) is smaller than 25 % by mole, the number of the side chains which act as the liquid crystal is too small so that the response speed of the device may be decreased. The liquid crystal side chains do not flow as the low molecular weight liquid crystal and maintains the threshold voltage of the mixture film and the memory of the device after removal of the electric field. Then, if the number of the liquid crystal side chain is too small, the threshold voltage of the mixture film tends to decrease or the memory of the device after the removal of the electric field may be deteriorated. In addition, when the number of the liquid crystal side chain decreases, the viscosity of the liquid crystalline polymer decreases, so that the self-supporting property of the mixture film may be deteriorated. In view of the response speed, the threshold voltage, the memory after removal of the electric field and the self-supporting property of the mixture film, the content of the repeating units (A) is preferably from 50 to 80 % by mole.

To increase the response speed of the mixture film from the transparent state to the opaque state, it can be contemplated to transfer the turbulence of the ions which collide against the main chain of the liquid crystalline polymer to the whole backbone as quickly as possible.

To this end, the present invention provides a liquid crystal display device comprising a pair of electrodes at least one of which is transparent and a mixture film which is placed between said pair of electrode and comprises a cross linked side chain type liquid crystalline polymer, a low molecular weight liquid crystal and an electrolyte.

In the present invention, the liquid crystalline polymer comprising the repeating units (A) and (B) may be cross linked.

As the side chain type liquid crystalline polymer, there is preferably used a siloxane main chain type liquid crystalline polymer comprising a backbone having siloxane linkages and liquid crystal side chains grafted to the main chain. In addition, it is possible to use a side chain type liquid crystalline polymer comprising a main chain of a vinyl polymer or a polyalkylene oxide or a polyoxetane to which liquid crystal side chains are grafted.

The above liquid crystalline polymer may be a smectic or nematic one. when both the liquid crystalline polymer and the low molecular weight liquid crystal show nematic phases, it is necessary to select a combination of them which induces a smectic phase.

A molecular weight of the liquid crystalline polymer to be used in the present invention is usually from 1000 to 100,000, preferably from 2000 to 30,000 in view of the good response speed.

A weight ratio of the liquid crystalline polymer to the low molecular weight liquid crystal depends on chemical structures of two liquid crystals. Usually, it is from 5:95 to 70:30, preferably, from 20:80 to 70:30.

When the content of the liquid crystalline polymer is larger than the above range, the response speed decreases. When the content of the low molecular weight liquid crystal is larger than the above range, the self-supporting property is unsatisfactory.

Since the self-supporting property of the mixture film greatly depends on the content of the liquid crystalline polymer in the mixture film, the weight ratio of the liquid crystalline polymer to the low molecular weight liquid crystal is suitably adjusted depending on the molecular weight of the liquid crystalline polymer in the above range.

A preferred example of the liquid crystalline polymer having the siloxane main chain is a polymer comprising repeating units of the formula: 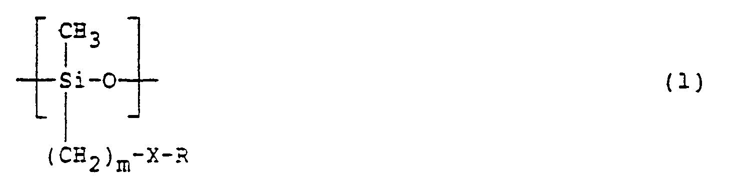
wherein X is a backbone group of a liquid crystal such as a group of the formula: 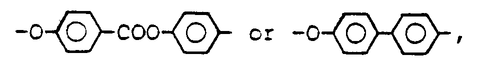
R is a substituent such as -CN or -OCH₃, and m is a positive integer.

The substituent R is an important group to impart a liquid crystal property to the polymer and can be the electron attractive group or the alkoxy group. Examples of the electron attractive group are a cyano group, a nitro group, an acyl group (e.g. an acetyl group), a halogen atom (e.g. fluorine, chlorine, bromine and iodine atoms), and the like. Examples of the alkoxy group are those having 1 to 6 carbon atoms such as an methoxy group, an ethoxy group, a propoxy group, an isopropoxy group, a butoxy group, a tert.-butoxy group, a pentyloxy group, a hexyloxy group and the like. Among them, a cyano group or a methoxy group is preferred since a phase transition temperature of the liquid crystal phase can be increased.

A preferred example of the polymer comprising the repeating units (1) is a polymer comprising repeating units of the formula: 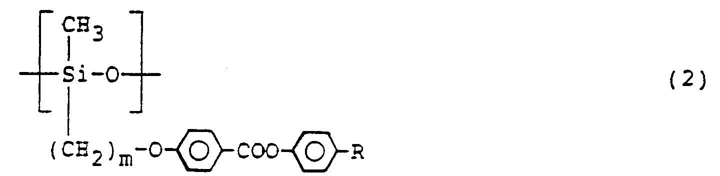
wherein R is -CN or -OCH₃ and m is an integer of 3 to 10.

Specific examples of a polymer comprising the repeating unit (1) are poly(4-methoxyphenyl-4'-hexyloxybenzoate methylsiloxane), poly(4-methoxyphenyl-4'-propoxybenzoate methylsiloxane), poly(4-methoxyphenyl-4'-butyloxybenzoate methylsiloxane), poly(4-methoxyphenyl-4'-decyloxybenzoate methylsiloxane), poly(4-cyanophenyl-4'-butyloxybenzoate methylsiloxane), poly(4-cyanophenyl-4'-hexyloxybenzoate methylsiloxane), poly(4-cyanophenyl-4'-propoxybenzoate methylsiloxane), poly(4-cyanophenyl-4'-decyloxybenzoate methylsiloxane) and the like. They may be used independently or as a mixture.

The siloxane main chain type liquid crystalline polymer may be prepared by a conventional method, for example, grafting the liquid crystal side chains to the Si-H bonds of the siloxane main chain through a hydrosilylation reaction.

In order to obtain the liquid crystalline polymer comprising less than 100 % by mole of the repeating units (A), a reaction ratio in the hydrosilylation reaction is controlled. For example, as a raw material polymer having the siloxane backbone, there is used a polymer comprising hydromethylsiloxane units having a Si-H bond and dimethylsiloxane units having no Si-H bond of the formula: 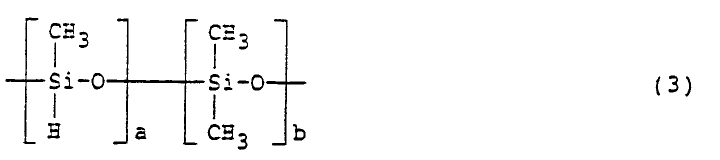
wherein a and b are independently a positive integer. Then, the polymer (3) is reacted with "a" moles of a compound forming the liquid crystal side chain of the formula:

CH₂=CH-(CH₂)ₘ₋₂-X-R (4)

wherein m, X and R are the same as defined above in the presence of a hydrosilylation catalyst such as H₂PtCl₆ by a conventional method to obtain a liquid crystalline polymer of the formula: 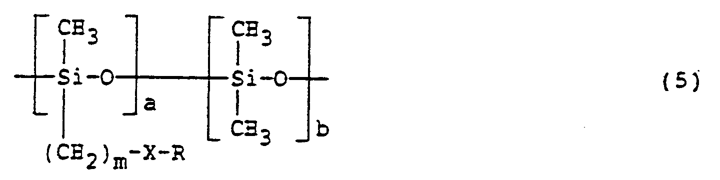
wherein a, b, m, X and R are the same as defined above.

To adjust the content of the repeating units (A) having the liquid crystal side chains, a molar ratio of the hydromethylsiloxane units and the dimethylsiloxane units, namely a ratio of a to b in the formula (3).

A preferred example of the polymer (4) is a polymer of the formula: 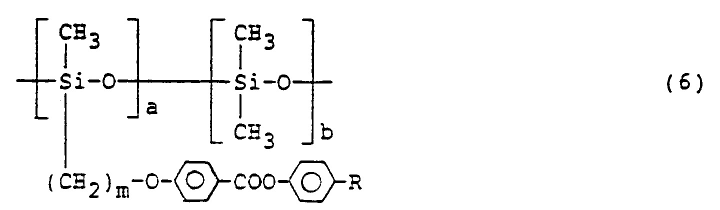
wherein R is -CN or -OCH₃, m is an integer of 3 to 10, and a ratio of a/(a + b) is at least 0.25 and less than 1.00.

Alternatively, the side-chain liquid crystalline polymer to be used according to the present invention may be prepared by alternating or random copolymerization of a monomer forming the repeating unit (A) and a monomer forming the repeating unit (B).

The cross linking of the liquid crystalline polymer can be carried out by a conventional method. For example, when the Si-H group is present as the reactive group, it is converted to a Si-OH group and then the polymer is cross linked by the formation of a -Si-O-Si- bond. In this case, the polymer is post heated at a temperature of 40 to 100°C to complete the cross linking. Alternatively, the cross linking may be effected by the addition of a di- or polyfunctional compound which reacts with the above reactive group.

A degree of the cross linking may vary with the desired response speed, the threshold voltage and the self-supporting property of the mixture film.

In the liquid crystalline polymer, at least a part of the repeating units (B) may be replaced with repeating units (C) having a reactive group which acts as a cross linking site.

For example, when a copolymer of hydromethylsiloxane and dimethylsiloxane is used as a raw material polymer of the liquid crystalline polymer, a siloxane backbone type liquid crystalline polymer of the formula: 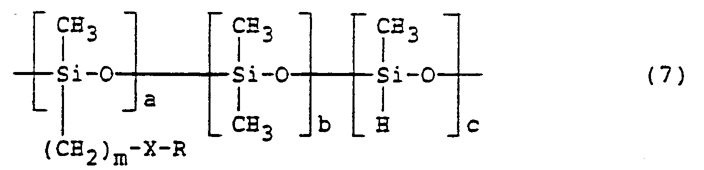
wherein a, b, m, X and R are the same as defined above, and c is a positive integer is obtained.

In the case of the polymer (7), a ratio of a/(a + b + c) is at least 0.25 and less than 1.00.

When the liquid crystalline polymer has a backbone of a vinyl polymer, a content of the repeating units (A) is controlled by adjusting a molar ratio of a monomer having the liquid crystal side chain and a monomer having no side chain in copolymerization.

For cross linking, a monomer having a reactive group as a cross linking site is further copolymerized alternatively or randomly.

As the low molecular weight liquid crystal, any of conventionally used low molecular weight liquid crystals may be used.

As the electrolyte, any one that is dissolved in a coating liquid can be used. A preferred example of the electrolyte is a quaternary ammonium salt of the formula: 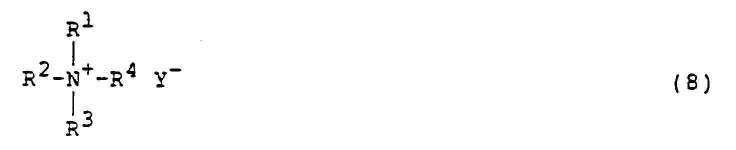
wherein R¹, R², R³ and R⁴ are the same or different and each a straight or branched C₁-C₆ alkyl group, and Y⁻ is a counter anion such as F⁻, Cl⁻, Br⁻, I⁻, CIO₄⁻, PF₄⁻ or BF₄⁻.

One or more electrolytes may be used.

An amount of the electrolyte is usually from 0.01 to 1 % by weight based on the whole weight of the mixture film.

The electrolyte improves the response speed of the mixture film due to its ions and also makes a change from the opaque state to the transparent state or from the transparent state to the opaque state surely.

The mixture film according to the present invention may contain a conventional dichromic dye to provide a color display device.

Further, to achieve good balance of the properties of the mixture film, the film may contain other side-chain type liquid crystalline polymer.

As the electrode, any of conventionally used electrodes may be used. Examples of the electrodes are glass plates or plastic films (e.g. films of polyethylene terephthalate (PET), polyether sulfone (PES), etc.) on which a conductive film such as ITO (indium tin oxide) or SnO₂ is formed by evaporation or sputtering.

The liquid crystal display device may be prepared by coating a solution of the liquid crystalline polymer, the low molecular weight liquid crystal and the electrolyte in the solvent on at least one of the electrodes, drying and solidifying the solution to form the mixture film and placing the other electrode on the mixture film.

The solvent may be selected according to the kinds of the liquid crystalline polymer, the low molecular weight liquid crystal and the electrolyte.

The solution may be coated on the electrode by a conventional method, for example, by bar coating, spin coating, spray coating or roll coating.

Alternatively, the liquid crystal display device may be prepared by placing a mixture of the low molecular weight liquid crystal, the liquid crystalline polymer, the electrolyte and a spacer on one of a pair of the electrodes, and laminating the other electrode on the mixture using at least one roll.

The spacer acts to maintain a certain gap between the pair of the electrodes. Examples of the spacer are glass rods, plastic balls, silica balls and the like.

The liquid crystal display device can be prepared by forming the mixture film separately and sandwiching the mixture film between a pair of the electrodes.

### PREFERRED EMBODIMENTS OF THE INVENTION

The present invention will be illustrated by following Examples, in which "parts" are by weight.

### Example 1

A copolymer of hydromethylsiloxane and dimethylsiloxane having the formula: 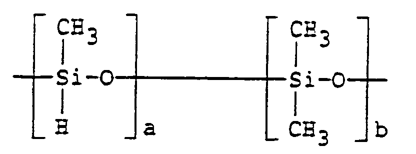
wherein a/(a + b) is 0.82-0.85 was reacted with 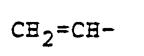 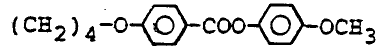
in an equimolar amount to the Si-H bonds to obtain a side chain type liquid crystalline polymer consisting of a copolymer of 4-methoxyphenyl-4'-hexyloxybenzoate methylsiloxane and dimethylsiloxane. A molar ratio of dimethylsiloxane units was 15-18 %, a grafting ratio ([a/(a + b)] x 100) of the liquid crystal side chain was 82-85 %, and a molecular weight was 18,000.

Then, the liquid crystalline polymer (43 parts), a low molecular weight liquid crystal (E 63 manufactured by Merk Japan) (50 parts) and tetraethylammonium bromide as an electrolyte (0.005 % by weight based on the total weight of the two liquid crystals) were dissolved in a mixed solvent of acetone and dichloroethane (weight ratio of 1:1) to obtain a coating solution.

The coating solution was coated on a transparent conductive film (ITO-PES) having a thickness of 100 µm with a bar coater and dried at room temperature for 30 minutes to form a mixture film. Then, on the mixture film, another transparent conductive film was laminated to produce a liquid crystal display device.

### Example 2

In the same manner as in Example 1 except that the ratio of a/(a + b) was changed to 0.50 to 0.55, the reactions were carried out to obtain a side chain type liquid crystalline polymer consisting of a copolymer of 4-methoxyphenyl-4'-hexyloxybenzoate methylsiloxane and dimethylsiloxane. A molar ratio of dimethylsiloxane units was 45-50 %, a grafting ratio of the liquid crystal side chain was 50-55 %, and a molecular weight was 3000.

Then, in the same manner as in Example 1 but using the above liquid crystalline polymer in an amount of 31 parts which corresponded to substantially the same moles of the liquid crystalline polymer used in Example 1, a coating solution was prepared and then a liquid crystal display device was produced.

### Example 3

In the same manner as in Example 1 except that the ratio of a/(a + b) was changed to 0.30 to 0.35, the reactions were carried out to obtain a side chain type liquid crystalline polymer consisting of a copolymer of 4-methoxyphenyl-4'-hexyloxybenzoate methylsiloxane and dimethylsiloxane. A molar ratio of dimethylsiloxane units was 65-70 %, a grafting ratio of the liquid crystal side chain was 30-35 %, and a molecular weight was 2000.

Then, in the same manner as in Example 1 but using the above liquid crystalline polymer in an amount of 23 parts which corresponded to substantially the same moles of the liquid crystalline polymer used in Example 1, a coating solution was prepared and then a liquid crystal display device was produced.

### Comparative Example 1

In the same manner as in Example 1 except that the ratio of a/(a + b) was changed to 0.03 to 0.04, the reactions were carried out to obtain a side chain type liquid crystalline polymer consisting of a copolymer of 4-methoxyphenyl-4'-hexyloxybenzoate methylsiloxane and dimethylsiloxane. A molar ratio of dimethylsiloxane units was 96-97 %, a grafting ratio of the liquid crystal side chain was 3-4 %, and a molecular weight was 3000.

Then, in the same manner as in Example 1 but using the above liquid crystalline polymer in an amount of 23 parts which corresponded to substantially the same moles as in Example 1, a coating solution was prepared and then a liquid crystal display device was produced.

### Comparative Example 2

In the same manner as in Example 1 except that the ratio of a/(a + b) was changed to 1.00 (namely b = 0), the reactions were carried out to obtain a side chain type liquid crystalline polymer consisting of 4-methoxyphenyl-4'-hexyloxybenzoate methylsiloxane. A molecular weight was 30,000.

Then, in the same manner as in Example 1 but using the above liquid crystalline polymer in an amount of 50 parts which corresponded to substantially the same moles as in Example 1, a coating solution was prepared and then a liquid crystal display device was produced.

### Comparative Example 3

In the same manner as in Comparative Example 2 but using 31 parts of the liquid crystalline polymer, a liquid crystal display device was produced.

### Response speed test I

On the liquid crystal display device, an alternating current of 1 kHz at 90 V was applied while radiating a He-Ne laser beam having a wavelength of 633 nm. Then, a time in which a transparency of the laser beam through the display device changed from 10 % to 90 % was measured as a response time from the transparent state to the opaque state. In the same way, a time in which a transparence of the laser beam through the display device changed from 90 % to 10 % was measured as a response time from the opaque state to the transparent state.

The results are shown in the Table 1.

**Table 1**

| Example No. | Grafting rate (%) | Response time (sec.) | |
|---|---|---|---|
| | | Transparent → Opaque | Opaque → Transparent |
| Comp. 1 | 3-4 | --- | --- |
| 1 | 82-85 | 0.45 | 0.13 |
| 2 | 50-55 | 0.3 | 0.08 |
| 3 | 30-35 | 0.5 | 0.03 |
| Comp. 2 | 100 | 0.6 | 0.25 |
| Comp. 3 | 100 | 0.75 | 0.12 |

### Example 4

Polydimethylsiloxane having the formula: 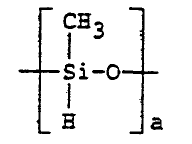
was reacted with 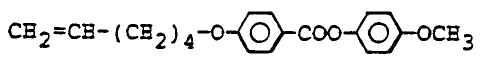
in 75 % by mole of the Si-H bonds in the above polymer to obtain a side chain type liquid crystalline polymer and then heated at 100°C for 24 hours to cross link the polymer molecules through the remaining Si-H bonds.

Then, the liquid crystalline polymer (27.3 parts), 4'-n-octyloxyphenyl 4-n-butylbenzoate (a low molecular weight liquid crystal) (27.3 parts), a low molecular weight liquid crystal (E 63 manufactured by Merk Japan) (45.4 parts) and tetraethylammonium bromide as an electrolyte (0.005 % by weight based on the total weight of the three liquid crystals) were dissolved in a mixed solvent of acetone and dichloroethane (weight ratio of 1:1) to obtain a coating solution.

Then, in the same manner as in Example 1 but using the above coating solution, a liquid crystal display device was produced.

### Example 5

In the same manner as in Example 4 but using 50 % by mole of 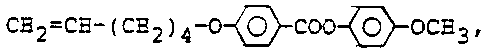
a liquid crystal display device was produced.

### Comparative Example 4

In the same manner as in Example 4 but using 100 % by mole of 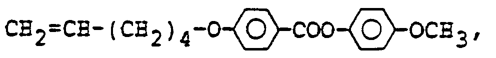
a liquid crystal display device was produced.

### Comparative Example 5

In the same manner as in Example 4 but using 100 % by mole of 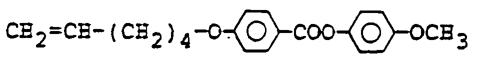
and 20 parts of the liquid crystalline polymer in the preparation of the coating solution, a liquid crystal display device was produced.

### Response speed test II

In the same manner as in Response speed test I except that the applied voltage was changed to 60 V, the response times were measured.

### Evaluation of cross linking state

An average molecular weight of each of the liquid crystalline polymers was measured to evaluate the cross linking state. The molecular weight was measured by gel permeation chromatography by the polystyrene molecular weight conversion method.

### Measurement of a threshold voltage

When a 1 kHz alternating current was applied on the liquid crystal device in the opaque state for 40 seconds, the maximum voltage at which the light transparency measured by the He-Ne laser was not changed was regarded as the threshold voltage.

The results are shown in Table 2.

**Table 2**

| Example No. | Grafting rate (%) | Response time (sec.) | | Av. Mw of polymer liquid crystal | Threshold voltage (V) |
|---|---|---|---|---|---|
| | | Transparent → Opaque | Opaque → transparent | | |
| 4 | 75 | 0.13 | 0.29 | 6370 | 20 |
| 5 | 50 | 0.12 | 0.11 | 8698 | 22 |
| Comp. 4 | 100 | 1.2 | 0.8 | 5400 | 5-10 |
| Comp. 5 | 100 | 1.5 | 0.6 | 5400 | 10 |

### Example 6

In the same manner as in Example 5 but using 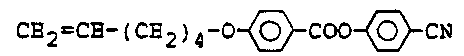
in place of 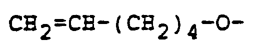 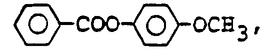
a liquid crystal display device was produced.

### Example 7

In the same manner as in Example 4 but using 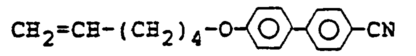
in place of 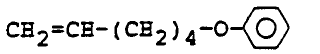 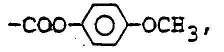
a liquid crystal display device was produced.

### Example 8

A copolymer of hydromethylsiloxane and dimethylsiloxane having the formula: 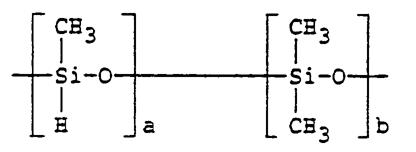
wherein a/(a + b) is 0.82-0.85 was reacted with 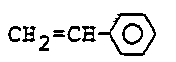 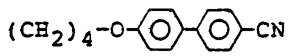
in an amount of 75 % by mole of the Si-H bonds in the above copolymer to obtain a side chain type liquid crystalline polymer and then heated at 100°C for 24 hours to cross link the polymer molecules through the remaining Si-H bonds.

Then, the liquid crystalline polymer (27.3 parts), 4'-n-octyloxyphenyl 4-n-butylbenzoate (a low molecular weight liquid crystal) (27.3 parts), a low molecular weight liquid crystal (E 63 manufactured by Merk Japan) (45.4 parts) and tetraethylammonium bromide as an electrolyte (0.005 % by weight based on the total weight of the three liquid crystals) were dissolved in a mixed solvent of acetone and dichloroethane (weight ratio of 1:1) to obtain a coating solution.

Then, in the same manner as in Example 1 but using the above coating solution, a liquid crystal display device was produced.

### Example 9

To the uncross linked side chain type liquid crystalline polymer prepared in Example 4, a difunctional cross linking agent of the formula:

CH₂=CH-CH₂-CH=CH₂

in an amount equivalent to remaining Si-H bonds in the liquid crystalline polymer was added and heated at 100°C for 24 hours to cross link the liquid crystalline polymer.

In the same manner as in Example 4 but using this cross linked liquid crystalline polymer, a liquid crystal display device was produced.

The same response speed test as Response speed test II was carried out. The results are shown in Table 3.

**Table 3**

| Example No. | Grafting rate (%) | Response time (sec.) | |
|---|---|---|---|
| | | Transparent → Opaque | Opaque → Transparent |
| 6 | 50 | 0.10 | 0.11 |
| 7 | 50 | 0.11 | 0.13 |
| 8 | 75 | 0.07 | 0.09 |
| 9 | 75 | 0.16 | 0.35 |

### Example 10

### Evaluation of the cross linked structure

A polyhydromethylsiloxane having the formula: 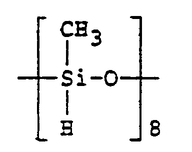
was reacted with 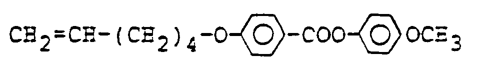
in an amount of 100 %, 75 %, 50 % or 25 % by mole to obtain a side chain type liquid crystalline polymer and heated at 100°C for 24 hours to cross link the polymer through the Si-H bonds (Si-H + H₂O → Si-OH + H₂; Si-OH + HO-Si → Si-O-Si + H₂O).

Then, a molecular weight of each polymer was measured by gas permeation chromatography (converted to a polystyrene molecular weight) to evaluate the degree of cross linking.

The results are shown in Figure. At 25 % by mole of the side chain compound, the polymer was gelled and a molecular weight was not measured.

From the facts that the polymer was gelled at 25 % by mole of the side chain compound and that the polystyrene reduced molecular weight increased as the amount of the side chain compound increased, the cross linking of the polymer was confirmed.

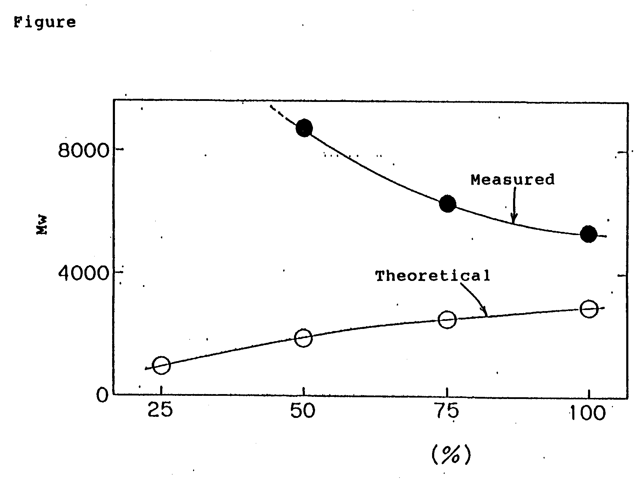

## Claims

1. A liquid crystal display device comprising a pair of electrodes at least one of which is transparent and a mixture film which is placed between said pair of electrode and comprises a side chain type liquid crystalline polymer which comprises repeating units having a liquid crystal side chain (A) and repeating units having no liquid crystal side chain (B), a low molecular weight liquid crystal and an electrolyte.

2. The liquid crystal display device according to claim 1, wherein a molar ratio of said repeating units (A) to a total mole of said repeating units (A) and (B) is at least 0.25 and smaller than 1.00.

3. The liquid crystal display device according to claim 1, wherein at least a part of said repeating units (B) is replaced with repeating units (C) having a reactive group which acts as a cross linking site.

4. The liquid crystal display device according to claim 3, wherein said liquid crystalline polymer is cross linked through said repeating units (C).

5. The liquid crystal display device according to claim 1, wherein said liquid crystalline polymer is a side-chain type polymer comprising a backbone to which a compound forming said liquid crystal side chain is grafted.

6. The liquid crystal display device according to claim 1, wherein said liquid crystalline polymer is a polymer comprising repeating units of the formula: 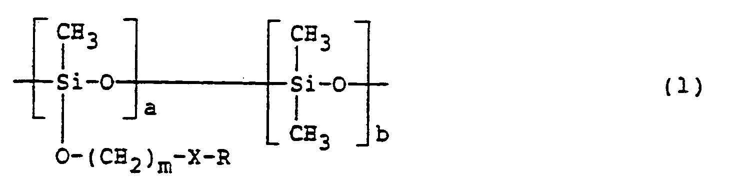 wherein X is a group of the formula: 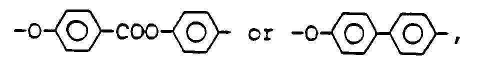 R is -CN or -OCH₃, and m, a and b are each a positive integer.

7. The liquid crystal display device according to claim 1, wherein a weight ratio of said liquid crystalline polymer to said low molecular weight liquid crystal is from 5:95 to 70:30.

8. The liquid crystal display device according to claim 1, wherein said electrolyte is a quarternary ammonium salt.

9. The liquid crystal display device according to claim 8, wherein said quaternary ammonium salt is a compound of the formula: 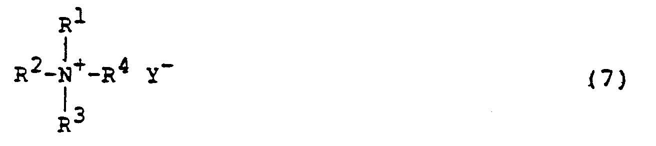 wherein R¹, R², R³ and R⁴ are the same or different and each a straight or branched C₁-C₆ alkyl group, and Y⁻ is a counter anion.

10. The liquid crystal display device according to claim 2, wherein said molar ratio of said repeating units (A) to the total mole of said repeating units (A) and (B) is adjusted by controlling a molar ratio of repeating units having reactive group with which a liquid crystal side chain can be grafted to the total mole of whole repeating units.

11. The liquid crystal display device according to claim 2, wherein said molar ratio of said repeating units (A) to the total mole of said repeating units (A) and (B) is adjusted by controlling a molar ratio of an amount of liquid crystal side chains to be grafted to moles of repeating units having reactive group with which the liquid crystal side chain can be grafted.

12. A liquid crystal display device comprising a pair of electrodes at least one of which is transparent and a mixture film which is placed between said pair of electrode and comprises a cross linked side chain type liquid crystalline polymer, a low molecular weight liquid crystal and an electrolyte.

13. The liquid crystal display device according to claim 12, wherein said electrolyte is a quarternary ammonium salt.

14. The liquid crystal display device according to claim 13, wherein said quaternary ammonium salt is a compound of the formula: 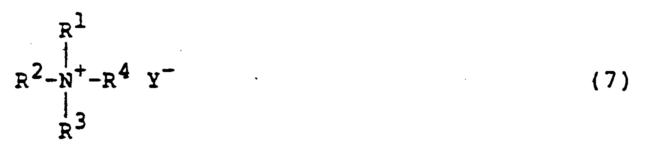 wherein R¹, R², R³ and R⁴ are the same or different and each a straight or branched C₁-C₆ alkyl group, and Y⁻ is a counter anion.
